# EUROPÄISCHE PATENTSCHRIFT

(11) **EP 2 855 100 B1**
(45) Veröffentlichungstag und Bekanntmachung des Hinweises auf die Patenterteilung: **19.10.2016**
(21) Anmeldenummer: 13715653.5
(22) Anmeldetag: 03.04.2013
(51) Int. Cl.: B25F 5/00, G06F 12/00, G05B 19/418

(54) **ELEKTROWERKZEUG**
ELECTRIC TOOL
OUTIL ÉLECTRIQUE

(30) Priorität: 25.05.2012 DE 102012208919; 30.11.2012 DE 102012221997
(43) Veröffentlichungstag der Anmeldung: 08.04.2015
(73) Patentinhaber: Robert Bosch GmbH, 70442 Stuttgart (DE)
(72) Erfinder: WINKLER, Thomas, 70565 Stuttgart (DE); HOFFMANN, Ulli, 75223 Niefern-Oeschelbronn (DE); KUESPERT, Klaus, 70771 Leinfelden-Echterdingen (DE); MARX, Klaus, 70563 Stuttgart (DE); DIEM, Carsten, 71640 Ludwigsburg (DE); BREITENBACH, Jan, 70569 Stuttgart (DE); LENNARTZ, Juergen, 73760 Ostfildern (DE); SCHULMEISTER, Ulrich, 74321 Bietigheim-Bissingen (DE); BERTSCH, Christian, 71706 Markgroeningen (DE); DUESSELBERG, Achim, 73230 Kirchheim u.T. (DE); SPRENGER, Helge, 70806 Kornwestheim (DE)
(86) Internationale Anmeldenummer: PCT/EP2013/056978
(87) Internationale Veröffentlichungsnummer: WO 2013/174556

(56) Entgegenhaltungen:
- EP-A2- 1 559 511
- DE-A1-102008 000 973
- DE-A1-102010 029 729
- DE-U1-202006 014 606
- GB-A- 2 301 912
- US-A1- 2002 134 811
- US-A1- 2012 007 748

## Beschreibung

Es ist bereits ein Elektrowerkzeug, insbesondere eine Handwerkzeugmaschine, mit einer Steuereinheit mit einer Steuersoftware mit Steuerparametern, die dazu vorgesehen ist eine Antriebseinheit zu steuern, vorgeschlagen worden.

### Offenbarung der Erfindung

Die Erfindung geht aus von einer Handwerkzeugmaschine gemäß dem Oberbegriff des Patentanspruchs 1, mit einer Steuereinheit mit einer Steuersoftware mit Steuerparametern, die dazu vorgesehen ist eine Antriebseinheit zu steuern

Eine derartige Handwerkzeugmaschine gelt beispielsweise an der DE 20 2006 014 606 U1 hervor. Die Erfindung nicht eine Handwerkzeugmaschine gemäß dem Anspruch 1 vor.

Es wird vorgeschlagen, dass das Elektrowerkzeug eine Schnittstelleneinheit aufweist, die zu einer grundlegenden Aktualisierung und/oder Änderung der Steuersoftware und/oder der Steuerparameter vorgesehen ist. Unter einem "Elektrowerkzeug" soll in diesem Zusammenhang insbesondere ein Werkzeug mit zumindest einer Elektronikeinheit verstanden werden. Dabei soll unter einer "Elektronikeinheit" insbesondere eine Einheit verstanden werden, die zumindest einen elektrischen Strom in einem Gas, in einem Leiter, in einem Vakuum und/oder vorteilhaft in einem Halbleiter beeinflusst. Vorzugsweise weist die Elektronikeinheit zumindest einen Transistor, besonders bevorzugt zumindest einen Mikroprozessor und/oder zumindest ein anderes, dem Fachmann als sinnvoll erscheinendes Elektronikbauteil auf. Ferner soll in diesem Zusammenhang unter einer "Handwerkzeugmaschine" insbesondere ein handgeführtes Werkzeug verstanden werden, dass von einem Antriebssystem, wie insbesondere einem Motor, angetrieben wird. Vorzugsweise soll darunter insbesondere eine werkstückbearbeitende Maschine, vorteilhaft jedoch eine Bohrmaschine, ein Bohr- und/oder Schlaghammer, eine Säge, ein Hobel, ein Schrauber, eine Fräse, ein Schleifer, ein Winkelschleifer, ein Gartengerät und/oder ein Multifunktionswerkzeug verstanden werden. Des Weiteren soll in diesem Zusammenhang unter einer "Steuereinheit" insbesondere eine Einheit zur Steuerung und/oder Regelung verstanden werden, mit zumindest einem Steuergerät. Unter einem "Steuergerät" soll insbesondere eine Einheit mit einer Prozessoreinheit und mit einer Speichereinheit sowie insbesondere mit einem in der Speichereinheit gespeicherten Betriebssystem verstanden werden. Grundsätzlich kann die Steuereinheit mehrere untereinander verbundene Steuergeräte aufweisen, die vorzugsweise dazu vorgesehen sind, über ein System, wie insbesondere ein BusSystem, miteinander zu kommunizieren. Des Weiteren soll unter einer "Steuersoftware" in diesem Zusammenhang insbesondere eine Software verstanden werden, welche zumindest einen Teil eines Betriebssystems und/oder eine Software für das Betriebssystem bildet. Vorzugsweise ist die Steuersoftware dazu vorgesehen, auf zumindest einem Prozessor ausgeführt zu werden. Besonders bevorzugt weist die Steuersoftware zumindest eine Regelroutine, Steuerroutine und/oder Berechnungsroutine auf. Ferner soll in diesem Zusammenhang unter einem "Steuerparameter" insbesondere eine Kennzahl und/oder eine Kenngröße zumindest einer Einheit des Elektrowerkzeugs verstanden werden, die von der Steuereinheit zumindest teilweise gesteuert wird. Es sind verschiedene, dem Fachmann als sinnvoll erscheinende Parameter denkbar, insbesondere sollen darunter jedoch Betriebsparameter, wie beispielsweise eine Drehzahl, eine Schlagzahl, ein Drehmoment und/oder ein Reglerverhältnis verstanden werden. Unter einer "Antriebseinheit" soll in diesem Zusammenhang insbesondere eine Motoreinheit verstanden werden. Vorzugsweise soll unter einer "Antriebseinheit" insbesondere eine elektrische und/oder mechanische und/oder pneumatische Motoreinheit verstanden werden, die in einem Betrieb vorteilhaft zur Erzeugung einer Drehbewegung vorgesehen ist. Vorteilhaft soll darunter insbesondere ein Elektromotor verstanden werden. Unter einer "Schnittstelleneinheit" soll in diesem Zusammenhang insbesondere eine Einheit verstanden werden, welche zu einem Austausch von Daten vorgesehen ist. Insbesondere weist die Schnittstelleneinheit zumindest einen Informationseingang und zumindest einen Informationsausgang auf. Vorzugsweise ist ein Informationsfluss der Schnittstelleneinheit bidirektional ausgebildet. Bevorzugt ist die Schnittstelleneinheit dazu vorgesehen, mit zumindest einem physikalischen System verbunden zu sein, wobei das System sowohl mit einem Informationseingang als auch mit einem Informationsausgang der Schnittstelleneinheit verbunden ist. Besonders bevorzugt soll darunter eine Schnittstelleneinheit zwischen zumindest zwei physischen Systemen, wie insbesondere zwischen dem Elektrowerkzeug und zumindest einem oder mehreren Geräten der Außenwelt, verstanden werden. Es sind verschiedene, dem Fachmann als sinnvoll erscheinende Schnittstelleneinheiten denkbar, insbesondere soll darunter jedoch eine drahtlose Schnittstelle, wie beispielsweise Bluetooth, WLAN, UMTS, NFC (Near Field Communication), GSM (Global System for Mobile Communications) oder eine optische Schnittstelle, eine drahtgebundene Schnittstelle, wie beispielsweise ein USB-Anschluss, und/oder eine Laufwerk-Schnittstelle mittels eines Speichermediums, wie beispielsweise einer Speicherkarte, eines Speichersticks oder einer CD, verstanden werden. Dabei soll in diesem Zusammenhang unter einer "optischen Schnittstelle" insbesondere ein optischer Sensor verstanden werden, der dazu vorgesehen ist, ein optisches Signal zu empfangen und/oder auszulesen. Vorzugsweise ist der Sensor dazu vorgesehen, ein codiertes Signal, insbesondere über ein Flackern einer Leuchtquelle, wie insbesondere einer Leuchtdiode, zu empfangen und/oder auszulesen. Es sind verschiedene, dem Fachmann als sinnvoll erscheinende optische Sensoren denkbar, insbesondere soll darunter jedoch eine Photodiode und/oder ein Phototransistor und/oder andere bidirektionale oder unidirektionale optische Sensoren verstanden werden. Ferner soll in diesem Zusammenhang unter einer "grundlegenden Aktualisierung und/oder Änderung" eine Aktualisierung und/oder Änderung verstanden werden, welche sich direkt auf einen Betrieb des Elektrowerkzeugs auswirkt. Vorzugsweise soll darunter eine Aktualisierung und/oder Änderung verstanden werden, welche zumindest einen bereits bestehenden gespeicherten Betriebsparameter der Steuerparameter, vorzugsweise zumindest zwei bereits bestehende gespeicherte Betriebsparameter der Steuerparameter und besonders bevorzugt zumindest einen Großteil bereits bestehender gespeicherter Betriebsparameter der Steuerparameter ersetzt und/oder verschiebt. Dabei soll unter einem "Großteil der Betriebsparameter" insbesondere zumindest 50%, vorzugsweise zumindest 55% und besonders bevorzugt zumindest 60% der Betriebsparameter verstanden werden.

Durch die erfindungsgemäße Ausgestaltung des Elektrowerkzeugs kann das Elektrowerkzeug für verschiedene Anwendungsfälle optimiert werden. Ferner kann eine grundlegende Aktualisierung und/oder Änderung der Steuersoftware und/oder der Steuerparameter montagefrei realisiert werden. Dabei soll in diesem Zusammenhang unter "montagefrei" insbesondere verstanden werden, dass eine grundlegende Aktualisierung und/oder Änderung der Steuersoftware und/oder der Steuerparameter zerstörungsfrei und/oder ohne Austausch von Bauteilen vorgenommen werden kann. Vorzugsweise soll unter "montagefrei" insbesondere verstanden werden, dass weniger als 6 Schrauben, vorzugsweise weniger als 4 Schrauben und besonders bevorzugt weniger als 2 Schrauben aus- und/oder eingeschraubt werden müssen.

Es wird ferner vorgeschlagen, dass die Schnittstelleneinheit dazu vorgesehen ist, die Steuereinheit mit einer externen Programmiereinheit zu verbinden. Grundsätzlich wäre in einer Ausführungsform, die nicht unter den Schutzumfung der Ansprüche fällt, jedoch auch denkbar, dass die Schnittstelleneinheit als direkte Schnittstelle zu einem Bediener, in Form einer Bedieneinheit und/oder als Schnittstelle zu einem austauschbaren Bauteil ausgebildet ist. Unter "vorgesehen" soll insbesondere speziell programmiert, ausgelegt und/oder ausgestattet verstanden werden. Ferner soll in diesem Zusammenhang unter einer "externen Programmiereinheit" insbesondere eine Einheit mit einer Recheneinheit und mit zumindest einer Übertragungseinheit verstanden werden. Dabei soll unter einer "Recheneinheit" insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Des Weiteren soll dabei unter einer "Übertragungseinheit" insbesondere eine Einheit verstanden werden, die zu einer Übertragung von Daten vorgesehen ist. Eine Übertragung kann dabei sowohl drahtlos und/oder drahtgebunden sein. Vorzugsweise ist die Übertragungseinheit zu einem Übersenden von Daten vorgesehen. Dadurch kann vorteilhaft eine Anpassung und/oder eine Aktualisierung des Elektrowerkzeugs extern realisiert werden. Ferner kann eine Anzahl von Bauteilen des Elektrowerkzeugs gering gehalten werden.

Grundsätzlich wäre in einer Ausführungsform, die nicht unter den Schutzumfung der Ansprüche gällt, denkbar, dass die Schnittstelle von einem Einstellelement gebildet ist, an dem ein Bediener auf dem Elektrowerkzeug hinterlegte Änderungen an der Steuersoftware der Steuereinheit vornehmen kann. Es sind verschiedene, dem Fachmann als sinnvoll erscheinende Einstellelemente denkbar, wie beispielswiese ein Drehschalter und/oder zumindest ein einsteckbarer und/oder entfernbarer Jumper. Vorteilhaft ist der zumindest eine Jumper hinter einer Klappe eines Gehäuses des Elektrowerkzeugs angeordnet. Dadurch kann eine Änderung direkt am Gerät vorgenommen werden.

Es wird weiter vorgeschlagen, dass die Schnittstelleinheit dazu vorgesehen ist, eine drahtlose Verbindung zu der externen Programmiereinheit herzustellen. Es sind verschiedene, dem Fachmann als sinnvoll erscheinende drahtlose Verbindungen denkbar, insbesondere soll darunter jedoch eine Funkverbindung und/oder eine optische Verbindung verstanden werden. Dadurch kann eine Verbindung besonders schnell und einfach hergestellt werden. Ferner können außenliegende Schnittstellen, wie insbesondere Steckdosen und/oder Stecker vermieden werden, welche insbesondere anfällig für Beschädigungen und/oder Verschmutzungen sind.

Ferner wird vorgeschlagen, dass das Elektrowerkzeug zumindest eine Sicherheitsvorrichtung aufweist, die dazu vorgesehen ist, eine Benutzung der Schnittstelleneinheit zu autorisieren. Unter einer "Sicherheitsvorrichtung" soll in diesem Zusammenhang insbesondere eine Vorrichtung verstanden werden, die bei einem externen Zugriff einer Einheit auf die Schnittstelleneinheit ein Zugriffsrecht der Einheit überprüft und daraufhin die Schnittstelleneinheit sperrt und/oder freigibt. Ein Zugriffsrecht kann dabei insbesondere über eine Signatur in einer Software der Einheit und/oder über eine Signatur in den zu übertragenenden Daten und/oder über einen einzugebenden Code realisiert werden. Vorzugsweise soll dadurch eine Autorisierung lediglich für Endanwender, für Fachhändler, für Service-Personal im Servicefall und/oder für andere, dem Fachmann als sinnvoll erscheinenden Personen realisiert werden. Dadurch kann vorteilhaft erreicht werden, dass lediglich von einem Hersteller autorisierte Personen eine grundlegenden Aktualisierung und/oder Änderung der Steuersoftware und/oder der Steuerparameter der Steuereinheit und/oder andere Änderungen durchführen können. Beispielsweise wäre es dadurch möglich, dass ein Bediener mit seinem Elektrowerkzeug zu einem autorisierten Fachhändler geht und dieser das Elektrowerkzeug nach den Wünschen des Bedieners über eine externe Programmiereinheit mit einer Elektrowerkzeug-Applikation einstellt.

Zudem wäre denkbar, dass eine Autorisierung durch die Sicherheitsvorrichtung abgestuft erfolgt. Vorzugsweise weist die Sicherheitsvorrichtung dafür verschiedene Autorisierungsstufen auf, denen verschiedene Personengruppen zugeordnet sind. Unter "Autorisierungsstufen" sollen in diesem Zusammenhang insbesondere gestaffelte Autorisierungsrichtlinien verstanden werden. Vorzugsweise sind dabei jeder Autorisierungsstufe jeweils Autorisierungsrichtlinien zugeordnet, deren Freiheiten mit steigender Stufe zunehmen. Besonders bevorzugt sind jeder Autorisierungsstufe jeweils Personengruppen zugeordnet, die jeweils autorisiert sind. Dadurch können vorteilhaft Rechte zur Nutzung der Schnittstelleneinheit personengruppenspezifisch eingeschränkt und freigegeben werden. Dadurch wäre beispielsweise denkbar, dass ein Endanwender lediglich geringfügige Änderungen an der Steuersoftware und/oder den Steuerparametern vornehmen darf und Service-Personal auch weitreichende Änderungen an der Steuersoftware und/oder den Steuerparametern vornehmen darf.

Des Weiteren wird vorgeschlagen, dass die Steuereinheit dazu vorgesehen ist, empfangene benutzerdefinierte Stellgrößen zu verarbeiten und/oder zu implementieren. Unter "empfangenen Stellgrößen" sollen in diesem Zusammenhang insbesondere von der Schnittstelleneinheit empfangene und an die Steuereinheit weitergeleitete Stellgrößen verstanden werden. Ferner sollen in diesem Zusammenhang unter "benutzerdefinierten Stellgrößen" insbesondere von einem Benutzer vorgegebene Werte verstanden werden, die in direkter Wirkverbindung mit den Steuerparametern des Elektrowerkzeugs stehen. Es sind verschiedene, dem Fachmann als sinnvoll erscheinende Stellgrößen denkbar, wie beispielsweise Aggressivität und/oder Schlagenergie. Dabei soll in diesem Zusammenhang unter "Aggressivität" insbesondere ein Ansprechverhalten bzw. eine Reaktionszeit des Elektrowerkzeugs verstanden werden, das heißt die Zeit welche beispielsweise ein Werkzeug des Elektrowerkzeugs benötigt, bis es aus einem Stillstand eine Solldrehzahl und/oder eine Sollschlagzahl erreicht. Ferner soll in diesem Zusammenhang unter "implementieren" insbesondere in eine vorhandene Steuersoftware einbinden und/oder Teile der Steuersoftware ersetzen verstanden werden. Dadurch kann eine vorteilhafte und besonders genaue Einstellung der Steuereinheit realisiert werden, wodurch das Elektrowerkzeug angepasst werden kann.

Diesbezüglich wäre denkbar, dass das Elektrowerkzeug ein Einstellelement aufweist, über das zumindest ein Steuerparameter verändert werden kann. Vorzugsweise wäre denkbar, dass ein Ausgangswert des Steuerparameters durch die in der Steuereinheit implementierten Steuerparameter festgelegt ist und der Steuerparameter über das Einstellelement lediglich temporär eingestellt werden kann. Unter "temporär" kann dabei insbesondere bis zu einem nächsten Ausstecken und/oder Ausschalten verstanden werden.

Zudem wird vorgeschlagen, dass die Steuereinheit dazu vorgesehen ist, empfangene benutzerdefinierte Daten über einen spezifischen Anwendungsfall zu verarbeiten und/oder zu implementieren. Es sind verschiedene, dem Fachmann als sinnvoll erscheinende spezifische Anwendungsfälle denkbar, insbesondere sollen darunter jedoch spezifische Werkstoffe, wie beispielsweise Fliesen, Beton, Holz usw., spezifische Werkzeuge, wie beispielsweise Bohrer, Senkköpfe, Gewindebohrer, Kanalmeißel usw., und/oder spezifische Aufgaben, wie beispielswiese stampfen, hämmern, meißeln, bohren usw. verstanden werden. Beispielsweise können bei einem speziellen Fliesen-Modus, insbesondere für Bohrhämmer, Steuerparameter für einen Regler so eingestellt werden, dass bei einem Wechsel von Leerlauf auf Schlagen, das Schlagen im Vergleich zu einer Grundeinstellung, mit einer ausgeglichenen Schlagenergie und Reaktionszeit, besonders schnell erreicht werden kann. Dadurch kann das Elektrowerkzeug vorteilhaft und schnell auf verschiedene Anwendungsfälle angepasst werden. Ferner ist dadurch eine optimale Anpassung ohne konkretes Wissen eines Bedieners über Stellgrößen und/oder Parameter möglich.

Es wird ferner vorgeschlagen, dass die Steuereinheit dazu vorgesehen ist, empfangene benutzerdefinierte Daten über eine Umgebungsbedingung zu verarbeiten und/oder zu implementieren. Es sind verschiedene, dem Fachmann als sinnvoll erscheinende Umgebungsbedingungen denkbar, wie insbesondere Umgebungsdruck, Umgebungstemperatur, Umgebungsfeuchtigkeit und/oder Arbeitshöhe über Normalhöhennull. Dadurch können vorteilhaft besondere Umgebungsbedingungen ohne zusätzliche Sensorik durch das Elektrowerkzeug berücksichtigt werden. Ferner können besondere Arbeitsbedingungen außerhalb eines Auslegungsbereichs des Elektrowerkzeugs, wie beispielsweise das Arbeiten in großen Höhen, implementiert und berücksichtigt werden.

Es wird weiter vorgeschlagen, dass die Steuereinheit dazu vorgesehen ist, empfangene benutzerdefinierte und/oder benutzerspezifische Daten über ein Werkzeugverhalten zu verarbeiten und/oder zu implementieren. Unter einem "Werkzeugverhalten" soll in diesem Zusammenhang ein Verhalten des Elektrowerkzeugs verstanden werden, mit direkten Auswirkungen auf einen Bediener. Es soll darunter ein "aggressives" Verhalten, ein Verhalten mit einer hohen Schlagenergie und/oder ein vibrationsarmes Verhalten verstanden werden. Dabei soll unter einem "aggressiven Verhalten" insbesondere ein Verhalten mit einer schnellen Reaktionszeit des Elektrowerkzeugs in Bezug auf ein Erreichen einer Solldrehzahl verstanden werden. Das "aggressive Verhalten" kann beispielsweise beim Abschlagen von Fliesen verwendet werden. Das "Verhalten mit einer hohen Schlagenergie" kann beispielsweise beim Bohren in Stahlbeton verwendet werden. Das "vibrationsarmen Verhalten" kann beispielsweise von geräuschempfindlichen Anwendern und/oder von Anwendern mit Krankheiten, wie beispielsweise Weißfingerkrankheit und/oder Raynaud-Syndrom, verwendet werden. Dadurch kann insbesondere erreicht werden, dass das Elektrowerkzeug auf die Wünsche eines Bedieners eingestellt werden kann. Ferner ist dadurch eine besonders schnelle Einstellung ohne konkretes Wissen eines Bedieners über Stellgrößen und/oder Parameter möglich.

Ferner wird ein Verfahren zur grundlegenden Aktualisierung und/oder Änderung einer Steuersoftware und/oder von Steuerparametern einer Steuereinheit eines Elektrowerkzeugs vorgeschlagen.

Des Weiteren wird bezüglich des Verfahrens vorgeschlagen, dass in eine externe Programmiereinheit eingegebene benutzerdefinierte und/oder benutzerspezifische Daten und/oder Stellgrößen für die Steuereinheit des Elektrowerkzeug direkt oder indirekt an die Steuereinheit des Elektrowerkzeugs übertragen werden. Unter "direkt oder indirekt" soll in diesem Zusammenhang insbesondere verstanden werden, dass die Daten und/oder Stellgrößen direkt oder über weitere differierende Einheit und/oder in veränderter Form an die Steuereinheit übertragen werden. Dadurch kann vorteilhaft eine besonders einfache Handhabung erreicht werden, da die Daten und/oder Stellgrößen von der externen Programmiereinheit übertragen werden.

Zudem wird bezüglich des Verfahrens vorgeschlagen, dass benutzerdefinierte und/oder benutzerspezifische Daten für die Steuereinheit des Elektrowerkzeugs über die externe Programmiereinheit zu Stellgrößen für die Steuereinheit des Elektrowerkzeugs verarbeitet werden. Vorzugsweise wird bezüglich des Verfahrens vorgeschlagen, dass benutzerdefinierte und/öder benutzerspezifische Daten für die Steuereinheit des Elektrowerkzeugs über die externe Programmiereinheit zu Parametern für die Steuereinheit des Elektrowerkzeugs verarbeitet werden. Das heißt insbesondere, dass die Daten, welche keinen direkten Zusammenhang mit dem Elektrowerkzeug an sich haben, jedoch für einen Bediener verständlich und naheliegend sind, in Parameter und/oder in Stellgrößen verarbeitet werden, welche jedoch für einen Bediener unverständlich sein können. Demnach kann dadurch insbesondere erreicht werden, dass ein Bediener lediglich Daten seines Anwendungsfalls und/oder seiner Umgebungsbedingungen und/oder seines gewünschten Werkzeugverhaltens eingeben muss und kein zusätzliches Know-How benötigt. Ferner kann dadurch eine Rechenleistung des Elektrowerkzeugs gering gehalten werden, da ein Rechenprozess von der externen Programmiereinheit übernommen wird.

Es wird ferner eine externe Programmiereinheit zur Durchführung des Verfahrens vorgeschlagen. Vorzugsweise weist die externe Programmiereinheit dafür insbesondere ein Programm auf. Das Programm kann beispielsweise von einer Applikation, kurz "App", oder einer anderen Software gebildet sein.

Es wird vorgeschlagen, dass die externe Programmiereinheit als portables Rechensystem ausgebildet ist. Es sind verschiedene portable Rechensysteme denkbar, insbesondere soll darunter jedoch ein Laptop, ein Notebook, ein Netbook, ein Tablet-PC und/oder ein Smartphone verstanden werden. Dadurch kann insbesondere eine besonders handliche externe Programmiereinheit bereitgestellt werden. Grundsätzlich wäre jedoch auch denkbar, dass die externe Programmiereinheit von einem Desktop-Computer gebildet ist.

### Zeichnungen

Weitere Vorteile ergeben sich aus der folgenden Zeichnungsbeschreibung. In den Zeichnungen sind vier Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Elektrowerkzeug und eine externe Programmiereinheit in einer schematischen Darstellung ,
- Fig. 2: ein alternatives erfindungsgemäßes Elektrowerkzeug und eine alternative externe Programmiereinheit in einer schematischen Darstellung,
- Fig. 3: ein weiteres alternatives erfindungsgemäßes Elektrowerkzeug und eine weitere alternative externe Programmiereinheit in einer schematischen Darstellung und
- Fig. 4: ein weiteres alternatives erfindungsgemäßes Elektrowerkzeug und eine weitere alternative externe Programmiereinheit in einer schematischen Darstellung.

### Beschreibung der Ausführungsbeispiele

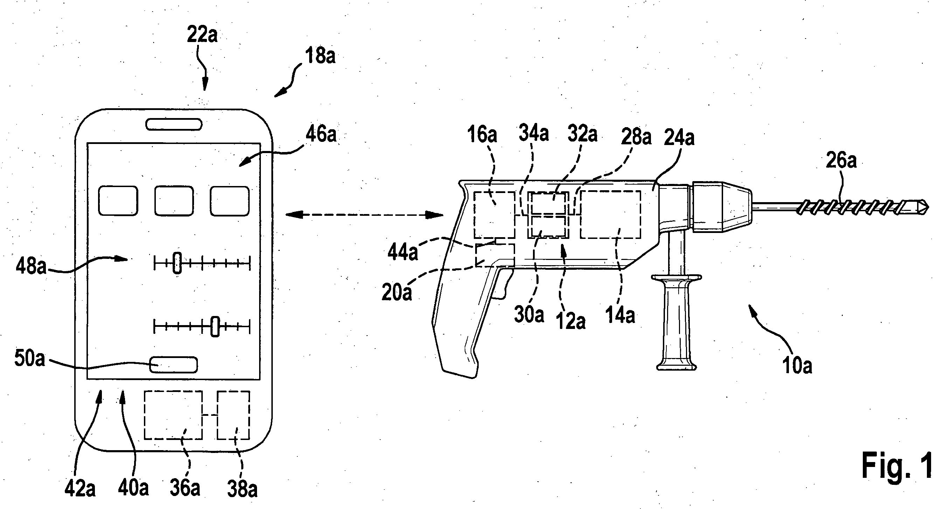

Die in den Figuren 1 bis 4 dargestellten Elektrowerkzeuge 10a, 10b, 10c, 10d und Programmiereinheiten 18a, 18b, 18c, 18d sind lediglich vereinfacht dargestellt, insbesondere in Hinblick auf eine Größenrelation untereinander.

Die Figur 1 zeigt ein erfindungsgemäßes Elektrowerkzeug 10a mit einer Steuereinheit 12a mit einer Steuersoftware mit Steuerparametern. Das Elektrowerkzeug 10a ist von einer Handwerkzeugmaschine gebildet. Das Elektrowerkzeug 10a weist eine Gehäuseeinheit 24a und ein Werkzeug 26a auf. Die Steuereinheit 12a ist dazu vorgesehen, eine Antriebseinheit 14a zu steuern. Die Steuereinheit 12a ist über eine Leitung 28a mit der Antriebseinheit 14a verbunden. Ferner ist die Steuereinheit 12a innerhalb der Gehäuseeinheit 24a des Elektrowerkzeugs 10a angeordnet. Die Steuereinheit 12a weist eine Prozessoreinheit 30a und eine Speichereinheit 32a auf. Des Weiteren weist das Elektrowerkzeug 10a eine Schnittstelleneinheit 16a auf, die zu einer grundlegenden Aktualisierung und/oder Änderung der Steuersoftware und/oder der Steuerparameter vorgesehen ist. Die Schnittstelleneinheit 16a ist innerhalb der Gehäuseeinheit 24a des Elektrowerkzeugs 10a angeordnet. Ferner ist die Schnittstelleneinheit 16a über eine Leitung 34a mit der Steuereinheit 12a des Elektrowerkzeugs 10a verbunden.

Die Schnittstelleneinheit 16a ist dazu vorgesehen, die Steuereinheit 12a mit einer externen Programmiereinheit 18a zu verbinden. Die Schnittstelleneinheit 16a ist dazu vorgesehen, eine drahtlose Verbindung zu der externen Programmiereinheit 18a herzustellen. Die externe Programmiereinheit 18a ist von einem portablen Rechensystem 22a gebildet. Die externe Programmiereinheit 18a ist von einem Smartphone gebildet. Die externe Programmiereinheit 18a weist eine Recheneinheit 36a, eine Übertragungseinheit 38a und ein Display 40a auf. Das Display 40a ist von einem Berührungsbildschirm gebildet und dient damit teilweise als Eingabeeinheit 42a.

Das Elektrowerkzeug 10a weist eine Sicherheitsvorrichtung 20a auf, die dazu vorgesehen ist, eine Benutzung der Schnittstelleneinheit 16a zu autorisieren. Die Sicherheitsvorrichtung 20a ist über eine Leitung 44a mit der Schnittstelleneinheit 16a verbunden. Die Sicherheitsvorrichtung 20a überprüft bei der Schnittstelleneinheit 16a eingehende Daten. Bei den eingehenden Daten wird von der Sicherheitsvorrichtung 20a überprüft, ob sie eine von der Sicherheitsvorrichtung 20a bekannte Signatur aufweisen. Ist die Signatur der Daten nicht bekannt, werden die Daten verworfen und nicht an die Steuereinheit 12a weitergeleitet. Weisen die Daten eine bekannte Signatur auf, werden die Daten an die Steuereinheit 12a weitergeleitet.

Die Steuereinheit 12a ist dazu vorgesehen, empfangene benutzerdefinierte Stellgrößen zu verarbeiten und zu implementieren. Werden von der Schnittstelleneinheit 16a empfangene Stellgrößen an die Steuereinheit 12a weitergeleitet, bestimmt die Steuereinheit 12a Steuerparameter der Steuereinheit 12a, die den empfangenen Stellgrößen entsprechen. Die Bestimmung der Steuerparameter erfolgt über ein Kennfeld, in dem eine Stellgröße einem Steuerparameter zugeordnet ist. Grundsätzlich wäre jedoch auch denkbar, dass die Bestimmung der Steuerparameter über einen Algorithmus erfolgt. Die bestimmten Steuerparameter werden in der Speichereinheit 32a implementiert. Bei der Implementierung werden bereits bestehende Steuerparameter zumindest teilweise durch die bestimmten Steuerparameter ersetzt.

Die Steuereinheit 12a ist dazu vorgesehen, empfangene benutzerdefinierte Daten über einen spezifischen Anwendungsfall zu verarbeiten und zu implementieren. Von der externen Programmiereinheit 18a werden die zu einem spezifischen Anwendungsfall hinterlegten Stellgrößen an das Elektrowerkzeug 10a gesendet. Die hinterlegten Stellgrößen zu den benutzerdefinierten Daten über einen spezifischen Anwendungsfall werden von der Steuereinheit 12a verarbeitet und anschließend als Steuerparameter implementiert.

Die Steuereinheit 12a ist dazu vorgesehen, empfangene benutzerdefinierte Daten über eine Umgebungsbedingung zu verarbeiten und zu implementieren. Von der externen Programmiereinheit 18a werden die zu einer Umgebungsbedingung hinterlegten bzw. die daraus hergeleiteten Stellgrößen an das Elektrowerkzeug 10a gesendet. Die hinterlegten Stellgrößen zu den benutzerdefinierten Daten über eine Umgebungsbedingung Textfeld auf, über das Werte, wie beispielsweise Temperaturen, Drücke usw. eingegeben werden können. Unterhalb der Optionsfelder 46a sind Schieberegler 48a angeordnet. Über die Schieberegler 48a können Stellgrößen genau eingestellt werden. Einer der Schieberegler 48a dient zu einem Einstellen einer Aggressivität und der andere Schieberegler 48a dient zu einem Einstellen einer Schlagenergie. Wird ein Optionsfeld 46a angewählt, werden die Schieberegler 48a entsprechend der bei dem Optionsfeld 46a hinterlegten Stellgrößen eingestellt. Unterhalb der Schieberegler 48a auf dem Display 40a ist ein Bestätigungsfeld 50a angeordnet. Durch Drücken des Bestätigungsfelds 50a werden die bei den Schiebereglern 48a eingestellten Stellgrößen von der Übertragungseinheit 38a der externen Programmiereinheit 18a an die Schnittstelleneinheit 16a des Elektrowerkzeugs 10a weitergeleitet.

Das Elektrowerkzeug 10a und die externe Programmiereinheit 18a bilden ein System.

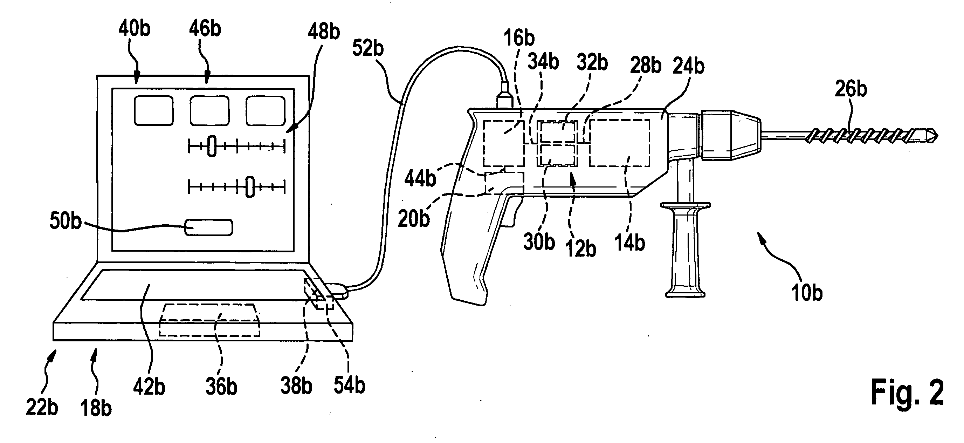

In den Figuren 2 bis 4 sind weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figur 1 verwiesen werden kann. Zur Unterscheidung der Ausführungsbeispiele ist der Buchstabe a in den Bezugszeichen des Ausführungsbeispiels in der Figur 1 durch die Buchstaben b, c und d in den Bezugszeichen der Ausführungsbeispiele der Figuren 2 bis 4 ersetzt. Bezüglich gleich bezeichneter Bauteile, insbesondere in Bezug auf Bauteile mit gleichen Bezugszeichen, kann grundsätzlich auch auf die Zeichnung und/oder die Beschreibung des Ausführungsbeispiels der Figur 1 verwiesen werden.

Die Figur 2 zeigt ein alternatives erfindungsgemäßes Elektrowerkzeug 10b mit einer Steuereinheit 12b mit einer Steuersoftware mit Steuerparametern. Die Steuereinheit 12b ist dazu vorgesehen, eine Antriebseinheit 14b zu steuern. Des Weiteren weist das Elektrowerkzeug 10b eine Schnittstelleneinheit 16b auf, die zu einer grundlegenden Aktualisierung und/oder Änderung der Steuersoftware und/oder der Steuerparameter vorgesehen ist. Die Schnittstelleneinheit 16b ist innerhalb der Gehäuseeinheit 24b des Elektrowerkzeugs 10b angeordnet. Die Schnittstelleneinheit 16b ist von einem USB-Anschluss gebildet.

Die Schnittstelleneinheit 16b ist dazu vorgesehen, die Steuereinheit 12b mit einer externen Programmiereinheit 18b zu verbinden. Die Schnittstelleneinheit 16b ist dazu werden von der Steuereinheit 12a verarbeitet und anschließend als Steuerparameter implementiert.

Die Steuereinheit 12a ist dazu vorgesehen, empfangene benutzerdefinierte und/oder benutzerspezifische Daten über ein Werkzeugverhalten zu verarbeiten und zu implementieren. Von der externen Programmiereinheit 18a werden die zu dem Werkzeugverhalten hinterlegten Stellgrößen an das Elektrowerkzeug 10a gesendet. Die hinterlegten Stellgrößen zu den benutzerdefinierten und/oder benutzerspezifischen Daten über ein Werkzeugverhalten werden von der Steuereinheit 12a verarbeitet und anschließend als Steuerparameter implementiert.

Die externe Programmiereinheit 18a ist zur Durchführung eines Verfahrens vorgesehen. Das Verfahren ist zur grundlegenden Aktualisierung und/oder Änderung einer Steuersoftware und/oder von Steuerparametern der Steuereinheit 12a des Elektrowerkzeugs 10a vorgesehen. Bei dem Verfahren werden in die externe Programmiereinheit 18a eingegebene benutzerdefinierte und/oder benutzerspezifische Daten und Stellgrößen für die Steuereinheit 12a des Elektrowerkzeugs 10a über die Schnittstelleneinheit 16a an die Steuereinheit 12a des Elektrowerkzeugs 10a übertragen. Bei dem Verfahren werden die in das Display 40a der externen Programmiereinheit 18a eingegebenen benutzerdefinierten und/oder benutzerspezifischen Daten und Stellgrößen für die Steuereinheit 12a des Elektrowerkzeug 10a bei einer Bestätigung der Eingaben über die Übertragungseinheit 38a an die Schnittstelleneinheit 16a gesendet und weiter an die Steuereinheit 12a des Elektrowerkzeugs 10a übertragen. Ferner werden bei dem Verfahren benutzerdefinierte und/oder benutzerspezifische Daten für die Steuereinheit 12a des Elektrowerkzeugs 10a über die externe Programmiereinheit 18a zu Stellgrößen für die Steuereinheit 12a des Elektrowerkzeugs 10a verarbeitet. Demnach werden auch die benutzerdefinierten und/oder benutzerspezifischen Daten immer als Stellgrößen auf die Steuereinheit 12a des Elektrowerkzeugs 10a übertragen.

Auf dem Display 40a der externen Programmiereinheit 18a sind für einen Bediener verschiedene Einstellmöglichkeiten dargestellt. In einem oberen Bereich des Displays 40a sind Optionsfelder 46a für Voreinstellungen angeordnet. Die Optionsfelder 46a können durch Drücken angewählt werden. Jedem Optionsfeld 46a sind jeweils voreingestellte Stellgrößen hinterlegt. Über die Optionsfelder 46a können spezifische Anwendungsfälle, Umgebungsbedingungen und Werkzeugverhalten angewählt werden. Zumindest eines der Optionsfelder 46a weist zumindest ein nicht weiter sichtbares werden von der Steuereinheit 12a verarbeitet und anschließend als Steuerparameter implementiert.

Die Steuereinheit 12a ist dazu vorgesehen, empfangene benutzerdefinierte und/oder benutzerspezifische Daten über ein Werkzeugverhalten zu verarbeiten und zu implementieren. Von der externen Programmiereinheit 18a werden die zu dem Werkzeugverhalten hinterlegten Stellgrößen an das Elektrowerkzeug 10a gesendet. Die hinterlegten Stellgrößen zu den benutzerdefinierten und/oder benutzerspezifischen Daten über ein Werkzeugverhalten werden von der Steuereinheit 12a verarbeitet und anschließend als Steuerparameter implementiert.

Die externe Programmiereinheit 18a ist zur Durchführung eines Verfahrens vorgesehen. Das Verfahren ist zur grundlegenden Aktualisierung und/oder Änderung einer Steuersoftware und/oder von Steuerparametern der Steuereinheit 12a des Elektrowerkzeugs 10a vorgesehen. Bei dem Verfahren werden in die externe Programmiereinheit 18a eingegebene benutzerdefinierte und/oder benutzerspezifische Daten und Stellgrößen für die Steuereinheit 12a des Elektrowerkzeugs 10a über die Schnittstelleneinheit 16a an die Steuereinheit 12a des Elektrowerkzeugs 10a übertragen. Bei dem Verfahren werden die in das Display 40a der externen Programmiereinheit 18a eingegebenen benutzerdefinierten und/oder benutzerspezifischen Daten und Stellgrößen für die Steuereinheit 12a des Elektrowerkzeug 10a bei einer Bestätigung der Eingaben über die Übertragungseinheit 38a an die Schnittstelleneinheit 16a gesendet und weiter an die Steuereinheit 12a des Elektrowerkzeugs 10a übertragen. Ferner werden bei dem Verfahren benutzerdefinierte und/oder benutzerspezifische Daten für die Steuereinheit 12a des Elektrowerkzeugs 10a über die externe Programmiereinheit 18a zu Stellgrößen für die Steuereinheit 12a des Elektrowerkzeugs 10a verarbeitet. Demnach werden auch die benutzerdefinierten und/oder benutzerspezifischen Daten immer als Stellgrößen auf die Steuereinheit 12a des Elektrowerkzeugs 10a übertragen.

Auf dem Display 40a der externen Programmiereinheit 18a sind für einen Bediener verschiedene Einstellmöglichkeiten dargestellt. In einem oberen Bereich des Displays 40a sind Optionsfelder 46a für Voreinstellungen angeordnet. Die Optionsfelder 46a können durch Drücken angewählt werden. Jedem Optionsfeld 46a sind jeweils voreingestellte Stellgrößen hinterlegt. Über die Optionsfelder 46a können spezifische Anwendungsfälle, Umgebungsbedingungen und Werkzeugverhalten angewählt werden. Zumindest eines der Optionsfelder 46a weist zumindest ein nicht weiter sichtbares Textfeld auf, über das Werte, wie beispielsweise Temperaturen, Drücke usw. eingegeben werden können. Unterhalb der Optionsfelder 46a sind Schieberegler 48a angeordnet. Über die Schieberegler 48a können Stellgrößen genau eingestellt werden. Einer der Schieberegler 48a dient zu einem Einstellen einer Aggressivität und der andere Schieberegler 48a dient zu einem Einstellen einer Schlagenergie. Wird ein Optionsfeld 46a angewählt, werden die Schieberegler 48a entsprechend der bei dem Optionsfeld 46a hinterlegten Stellgrößen eingestellt. Unterhalb der Schieberegler 48a auf dem Display 40a ist ein Bestätigungsfeld 50a angeordnet. Durch Drücken des Bestätigungsfelds 50a werden die bei den Schiebereglern 48a eingestellten Stellgrößen von der Übertragungseinheit 38a der externen Programmiereinheit 18a an die Schnittstelleneinheit 16a des Elektrowerkzeugs 10a weitergeleitet.

Das Elektrowerkzeug 10a und die externe Programmiereinheit 18a bilden ein System.

In den Figuren 2 bis 4 sind weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figur 1 verwiesen werden kann. Zur Unterscheidung der Ausführungsbeispiele ist der Buchstabe a in den Bezugszeichen des Ausführungsbeispiels in der Figur 1 durch die Buchstaben b, c und d in den Bezugszeichen der Ausführungsbeispiele der Figuren 2 bis 4 ersetzt. Bezüglich gleich bezeichneter Bauteile, insbesondere in Bezug auf Bauteile mit gleichen Bezugszeichen, kann grundsätzlich auch auf die Zeichnung und/oder die Beschreibung des Ausführungsbeispiels der Figur 1 verwiesen werden.

Die Figur 2 zeigt ein alternatives erfindungsgemäßes Elektrowerkzeug 10b mit einer Steuereinheit 12b mit einer Steuersoftware mit Steuerparametern. Die Steuereinheit 12b ist dazu vorgesehen, eine Antriebseinheit 14b zu steuern. Des Weiteren weist das Elektrowerkzeug 10b eine Schnittstelleneinheit 16b auf, die zu einer grundlegenden Aktualisierung und/oder Änderung der Steuersoftware und/oder der Steuerparameter vorgesehen ist. Die Schnittstelleneinheit 16b ist innerhalb der Gehäuseeinheit 24b des Elektrowerkzeugs 10b angeordnet. Die Schnittstelleneinheit 16b ist von einem USB-Anschluss gebildet.

Die Schnittstelleneinheit 16b ist dazu vorgesehen, die Steuereinheit 12b mit einer externen Programmiereinheit 18b zu verbinden. Die Schnittstelleneinheit 16b ist dazu vorgesehen, eine drahtgebundene Verbindung zu der externen Programmiereinheit 18b herzustellen. Die Schnittstelleneinheit 16b ist über ein USB-Kabel 52b mit der externen Programmiereinheit 18b verbunden. Die externe Programmiereinheit 18b ist von einem portablen Rechensystem 22b gebildet. Die externe Programmiereinheit 18b ist von einem Notebook gebildet. Die externe Programmiereinheit 18b weist eine Recheneinheit 36b, eine Übertragungseinheit 38b, ein Display 40b und eine Eingabeeinheit 42b auf. Die Übertragungseinheit 38b ist von einem USB-Anschluss 54b gebildet.

Die externe Programmiereinheit 18b ist zur Durchführung eines Verfahrens vorgesehen. Das Verfahren ist zur grundlegenden Aktualisierung und/oder Änderung einer Steuersoftware und/oder von Steuerparametern der Steuereinheit 12b des Elektrowerkzeugs 10b vorgesehen. Bei dem Verfahren werden in die externe Programmiereinheit 18b eingegebene benutzerdefinierte und/oder benutzerspezifische Daten und Stellgrößen für die Steuereinheit 12b des Elektrowerkzeug 10b über die Schnittstelleneinheit 16b an die Steuereinheit 12b des Elektrowerkzeugs 10b übertragen. Ferner werden bei dem Verfahren benutzerdefinierte und/oder benutzerspezifische Daten und Stellgrößen für die Steuereinheit 12b des Elektrowerkzeugs 10b über die externe Programmiereinheit 18b zu Steuerparametern für die Steuereinheit 12b des Elektrowerkzeugs 10b verarbeitet. Demnach werden die benutzerdefinierten und/oder benutzerspezifischen Daten und die Stellgrößen als Steuerparameter auf die Steuereinheit 12b des Elektrowerkzeugs 10b übertragen.

Die Steuereinheit 12b des Elektrowerkzeugs 10b ist dazu vorgesehen, empfangene Steuerparameter zu implementieren.

Durch Drücken eines Bestätigungsfelds 50b der externen Programmiereinheit 18b werden die bei Schiebereglern 48b eingestellten Stellgrößen von der Recheneinheit 36b der externen Programmiereinheit 18b zu Steuerparametern verarbeitet und über die Übertragungseinheit 38b der externen Programmiereinheit 18b an die Schnittstelleneinheit 16b des Elektrowerkzeugs 10b weitergeleitet.

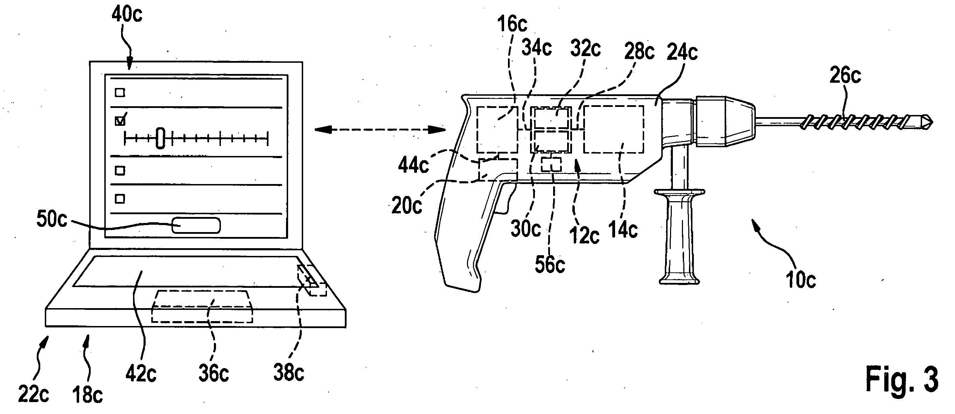

Figur 3 zeigt ein weiteres alternatives erfindungsgemäßes Elektrowerkzeug 10c und eine weitere alternative externe Programmiereinheit 18c. Das Elektrowerkzeug 10c weist eine Steuereinheit 12c mit einer Steuersoftware mit Steuerparametern auf. Die Steuereinheit 12c ist dazu vorgesehen, eine Antriebseinheit 14c zu steuern. Des Weiteren weist das Elektrowerkzeug 10c eine Schnittstelleneinheit 16c auf, die zu einer grundlegenden Aktualisierung und/oder Änderung der Steuersoftware und/oder der Steuerparameter vorgesehen ist. Die Schnittstelleneinheit 16c ist innerhalb einer Gehäuseeinheit 24c des Elektrowerkzeugs 10c angeordnet. Ferner ist die Schnittstelleneinheit 16c über eine Leitung 34c mit der Steuereinheit 12c des Elektrowerkzeugs 10c verbunden. Die Schnittstelleneinheit 16c ist dazu vorgesehen, die Steuereinheit 12c mit der externen Programmiereinheit 18c zu verbinden. Die Schnittstelleneinheit 16c ist dazu vorgesehen, eine drahtlose Verbindung zu der externen Programmiereinheit 18c herzustellen. Die externe Programmiereinheit 18c ist von einem portablen Rechensystem 22c gebildet.

Das Elektrowerkzeug 10c weist eine Sicherheitsvorrichtung 20c auf, die dazu vorgesehen ist, eine Benutzung der Schnittstelleneinheit 16c zu autorisieren. Die Sicherheitsvorrichtung 20c ist über eine Leitung 44c mit der Schnittstelleneinheit 16c verbunden. Die Sicherheitsvorrichtung 20c überprüft bei der Schnittstelleneinheit 16c eingehende Daten. Bei den eingehenden Daten wird von der Sicherheitsvorrichtung 20c überprüft, ob sie eine bezüglich der Art der Daten von der Sicherheitsvorrichtung 20c bekannte Signatur aufweisen. Ist die Signatur der Daten nicht bekannt, werden die Daten blockiert und nicht an die Steuereinheit 12c weitergeleitet. Weisen die Daten eine bekannte Signatur auf, werden die Daten an die Steuereinheit 12c weitergeleitet. Eine Autorisierung der Daten durch die Sicherheitsvorrichtung 20c erfolgt abgestuft. Die Sicherheitsvorrichtung 20c weist dafür verschiedene Autorisierungsstufen auf, denen verschiedene Personengruppen zugeordnet sind. Jede bekannte Datensignatur ist dabei einer Personengruppe zugeordnet und jeder Personengruppe ist eine Autorisierungsstufe zugeordnet. Jeder Autorisierungsstufe der Sicherheitsvorrichtung 20c sind jeweils Autorisierungsrichtlinien zugeordnet, deren Freiräume mit steigender Stufe zunehmen. In der höchsten Autorisierungsstufe werden von der Sicherheitsvorrichtung 20c alle Daten weitergeleitet. Mit sinkender Stufe werden nur gewisse Daten weitergeleitet, andere Daten werden blockiert. Als Autorisierungsstufen bietet sich als niedrigste Stufe ein Endanwender an, als mittlere Stufe ein Händler und als höchste Stufe Service-Personal.

Die Steuereinheit 12c ist dazu vorgesehen, empfangene Daten zu einer zusätzlichen Funktionalität zu verarbeiten und zu implementieren. Von der externen Programmiereinheit 18c wird die neue Funktionalität mit zugehörigen Daten an das Elektrowerkzeug 10c gesendet. Die Daten werden von der Steuereinheit 12c verarbeitet und anschließend als Steuerparameter implementiert.

Die externe Programmiereinheit 18c ist zur Durchführung eines Verfahrens vorgesehen. Das Verfahren ist zur grundlegenden Aktualisierung und/oder Änderung einer Steuersoftware und/oder von Steuerparametern der Steuereinheit 12c des Elektrowerkzeugs 10c vorgesehen. Bei dem Verfahren werden in der externen Programmiereinheit 18c ausgewählte Funktionalitäten des Elektrowerkzeugs 10c über die Schnittstelleneinheit 16c an die Steuereinheit 12c des Elektrowerkzeugs 10c übertragen. Ferner werden bei dem Verfahren die Funktionalitäten des Elektrowerkzeugs 10c über die externe Programmiereinheit 18c zu Stellgrößen für die Steuereinheit 12c des Elektrowerkzeugs 10c verarbeitet.

Die externe Programmiereinheit 18c ist zur Durchführung eines weiteren Verfahrens vorgesehen. Das Verfahren ist zum Auslesen und Verarbeiten von Daten der Steuereinheit 12c des Elektrowerkzeugs 10c über die Schnittstelleneinheit 16c vorgesehen. Das Verfahren ist zum Auslesen von nutzungsspezifischen Daten des Elektrowerkzeugs 10c über die Schnittstelleneinheit 16c vorgesehen.

Ein Bediener kann in der externen Programmiereinheit 18c über eine Website und/oder über ein Internet-Verkaufsportal und/oder über eine Software zusätzliche Funktionen für das Elektrowerkzeug 10c herunterladen. Alle heruntergeladenen Funktionen werden in einer Software angezeigt, ein Bediener kann in dieser Software gegebenenfalls teilweise Parameter der Funktion begrenzt einstellen. Ist das Elektrowerkzeug 10c über die Schnittstelleneinheit 16c mit der externen Programmiereinheit 18c verbunden, kann ein Bediener eine gewünschte Funktion auswählen und über ein Bestätigungsfeld 50c auf das Elektrowerkzeug 10c übertragen. Diese herunterladbaren Funktionen sind der niedrigen Autorisierungsstufe zugeordnet und können demnach bereits von einem Endanwender aufgespielt werden.

Dabei steht eine Anbohrfunktion zur Verfügung. Dabei werden Steuerparameter der Steuereinheit 12c des Elektrowerkzeugs 10c so eingestellt, dass ein Drehmoment bzw. eine Drehzahl bei einem Anlaufen verlangsamt hochgefahren wird, um vorteilhaft ein gezieltes Anbohren zu ermöglichen. Dabei kann ein Bediener begrenzt Parameter zu einer Dauer, innerhalb der das Drehmoment bzw. die Drehzahl hochgefahren wird, einstellen. Grundsätzlich sind jedoch auch andere, dem Fachmann als sinnvoll erscheinende einstellbare Parameter denkbar. Ferner steht eine Temperatur-Schutzfunktion zur Verfügung. Bei der Funktion werden während eines Betriebs, insbesondere bei kritischen Bauteilen, Temperaturen mitgeschätzt, und gegebenenfalls Schutzmechanismen aktiviert und/oder das Gerät vollständig deaktiviert. Dadurch kann insbesondere eine hohe Lebensdauer des Elektrowerkzeugs 10c erreicht werden. Des Weiteren steht eine Über-Kopf-Funktion zur Verfügung. Dabei werden Steuerparameter der Steuereinheit 12c des Elektrowerkzeugs 10c angepasst, um einen Über-Kopf-Betrieb des Elektrowerkzeug 10c zu ermöglichen. Grundsätzlich sind jedoch auch andere, dem Fachmann als sinnvoll erscheinende Funktionen denkbar.

Die Software der externen Programmiereinheit 18c weist zudem die Möglichkeit einer nutzungsspezifischen Anpassung auf. Wird das Elektrowerkzeug 10c über die Schnittstelleneinheit 16c mit der externen Programmiereinheit 18c verbunden, kann ein Benutzer an der externen Programmiereinheit 18c eine nutzungsspezifische Anpassung starten. Mit dem Starten werden von der externen Programmiereinheit 18c nutzungsspezifische Daten des Elektrowerkzeugs 10c über die Schnittstelleneinheit 16c ausgelesen. Die nutzungsspezifischen Daten werden von der Steuereinheit 12c des Elektrowerkzeugs 10c während eines Betriebes ständig auf einer Speichereinheit 56c des Elektrowerkzeugs 10c abgespeichert. Die ausgelesenen Daten werden anschließend von der externen Programmiereinheit 18c verarbeitet. Nach einer Verarbeitung werden von der externen Programmiereinheit 18c für das Elektrowerkzeug 10c spezifische, optimierte Steuerparameter berechnet und auf das Elektrowerkzeug 10c übertragen. Die nutzungsspezifische Anpassung ist einer hohen Autorisierungsstufe zugeordnet und kann demnach lediglich von Service-Personal aufgespielt werden. Grundsätzlich wäre insbesondere denkbar, dass eine nutzungsspezifische Anpassung lediglich an einem autorisierten Service-Rechner und/oder an einem Zentralrechner möglich ist.

Für die nutzungsspezifische Anpassung werden von der Steuereinheit 12c Nutzungsdauern von Funktionen auf der Speichereinheit 56c abgespeichert. Wird nun beispielsweise bei dem Elektrowerkzeug 10c lediglich eine Hammerfunktion genutzt und keine Bohrfunktion, wird bei der Anpassung eine Anlaufzeit reduziert, da für die Hammerfunktion kein ruhiges Anlaufen nötig ist.

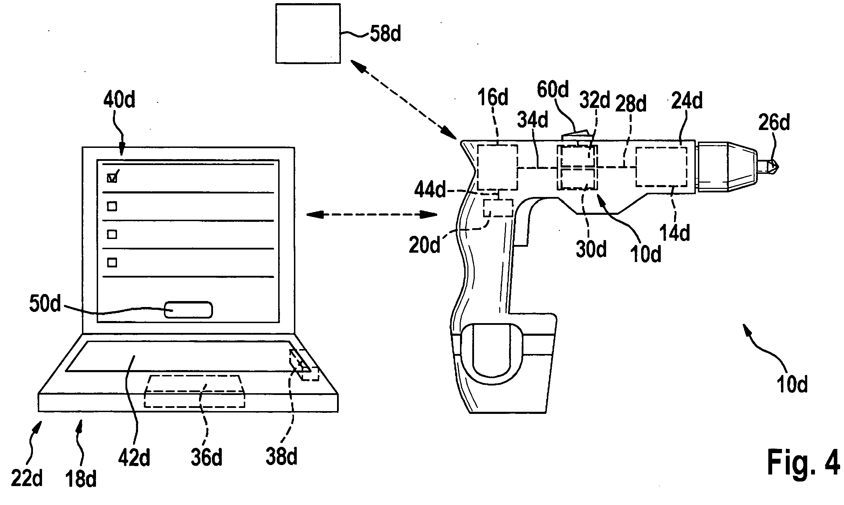

Figur 4 zeigt ein weiteres alternatives erfindungsgemäßes Elektrowerkzeug 10d und eine weitere alternative externe Programmiereinheit 18d. Das Elektrowerkzeug 10d ist von einem Akkuschrauber gebildet. Das Elektrowerkzeug 10d weist eine Steuereinheit 12d mit einer Steuersoftware mit Steuerparametern auf. Die Steuereinheit 12d ist dazu vorgesehen, eine Antriebseinheit 14d zu steuern. Des Weiteren weist das Elektrowerkzeug 10d eine Schnittstelleneinheit 16d auf, die zu einer grundlegenden Aktualisierung und/oder Änderung der Steuersoftware und/oder der Steuerparameter vorgesehen ist. Die Schnittstelleneinheit 16d ist innerhalb einer Gehäuseeinheit 24d des Elektrowerkzeugs 10d angeordnet. Ferner ist die Schnittstelleneinheit 16d über eine Leitung 34d mit der Steuereinheit 12d des Elektrowerkzeugs 10d verbunden. Die Schnittstelleneinheit 16d ist dazu vorgesehen, die Steuereinheit 12d mit der externen Programmiereinheit 18d und zumindest dem weiteren Gerät 58d zu verbinden. Die Schnittstelleneinheit 16d ist dazu vorgesehen, eine drahtlose Verbindung zu der externen Programmiereinheit 18d und zumindest einem weiteren Gerät 58d herzustellen. Die Schnittstelleneinheit 16d weist ein nicht weiter sichtbares NFC-Schnittstellenelement und ein nicht weiter sichtbares GSM-Schnittstellenelement auf. Ferner weist das Elektrowerkzeug 10d ein Schaltelement 60d auf. Das Schaltelement 60d ist von einem Drehschalter gebildet. Das Schaltelement 60d ist mit der Steuereinheit 12d verbunden.

Die Steuereinheit 12d ist dazu vorgesehen, empfangene Daten zu einer speziellen Anwendung zu verarbeiten und zu implementieren. Von der externen Programmiereinheit 18d wird die spezielle Anwendung mit zugehörigen Daten an das Elektrowerkzeug 10d gesendet. Die Daten werden von der Steuereinheit 12d verarbeitet und anschließend als Steuerparameter implementiert.

Die externe Programmiereinheit 18d ist zur Durchführung eines Verfahrens vorgesehen. Das Verfahren ist zur grundlegenden Aktualisierung und/oder Änderung einer Steuersoftware und/oder von Steuerparametern der Steuereinheit 12d des Elektrowerkzeugs 10d vorgesehen. Bei dem Verfahren werden in der externen Programmiereinheit 18d ausgewählte spezielle Anwendungen des Elektrowerkzeugs 10d über die Schnittstelleneinheit 16d an die Steuereinheit 12d des Elektrowerkzeugs 10d übertragen. Ferner werden bei dem Verfahren die Anwendungen des Elektrowerkzeugs 10d über die externe Programmiereinheit 18d zu Stellgrößen für die Steuereinheit 12d des Elektrowerkzeugs 10d verarbeitet.

Ein Bediener kann in der externen Programmiereinheit 18d über eine Website und/oder über ein Internet-Verkaufsportal und/oder über eine Software zusätzliche Anwendungen des Elektrowerkzeug 10d herunterladen. Alle heruntergeladenen Anwendungen werden in einer Software angezeigt. Ist das Elektrowerkzeug 10d über die Schnittstelleneinheit 16d mit der externen Programmiereinheit 18d verbunden, kann ein Bediener eine gewünschte Anwendung auswählen und über ein Bestätigungsfeld 50d auf das Elektrowerkzeug 10d übertragen. Ein Bediener kann gegebenenfalls Parameter einer Anwendung über das Schaltelement 60d verändern. Je nach aufgespielter Anwendung kann sich eine Einstellmöglichkeit durch das Schaltelement 60d verändern. Grundsätzlich wäre denkbar, dass das Schaltelement 60d ein zugeordnetes Display aufweist, auf welchem aktuelle Einstellmöglichkeiten durch das Schaltelement 60d angezeigt werden.

Es gibt verschiedene Anwendungen welche auf das Elektrowerkzeug 10d aufgespielt werden können. Es gibt eine Anwendung zum Bohren von Löchern mit einer bestimmten Tiefe, ausgehend davon, dass ein Bediener einen konstanten Anpressdruck ausübt. Ferner gibt es spezielle Schraubanwendungen, wie das Erkennen, dass ein Schraubenkopf einer einzuschraubenden Schraube versenkt wurde. Dabei wird nach einer Erkennung die Antriebseinheit 14d des Elektrowerkzeugs 10d automatisch abgeschalten. Des Weiteren gibt es eine Schraubanwendung zum definierten Einschrauben einer Schraube. Dabei wird eine Schraube mit der definierten Umdrehungszahl eingeschraubt, so dass diese definiert heraussteht. Eine Einstellung der Einschraubtiefe erfolgt über das Schaltelement 60d. Grundsätzlich wäre jedoch auch eine Eingabe über einen Lernmodus denkbar, das heißt, dass ein Bediener einen Drehzahlverlauf vormacht, insbesondere bei der ersten Schraube, und dieser Drehzahlverlauf automatisch von dem Elektrowerkzeug 10d wiederholt wird.

Das nicht weiter sichtbare GSM-Schnittstellenelement der Schnittstelleneinheit 16d ist zur Durchführung eines Verfahrens vorgesehen. Das Verfahren ist zur automatisierten Kommunikation mit der Außenwelt vorgesehen. Das Verfahren ist zur automatisierten Kommunikation mit der Außenwelt bei der Notwendigkeit von Wartungsarbeiten vorgesehen. Bei dem Verfahren wird über eine nicht weiter sichtbare interne Diagnoseeinheit ein Zustand des Elektrowerkzeugs 10d überprüft, um die Notwendigkeit von Wartungsarbeiten zu überprüfen. Stehen Wartungsarbeiten an, meldet sich das Elektrowerkzeug 10d automatisch bei einer eingestellten Telefonnummer. Grundsätzlich wäre jedoch auch denkbar, das interne Diagnosegerät durch einen Betriebsstundenzähler zu ersetzten, der die Notwendigkeit von Wartungsarbeiten über die Betriebsstunden des Elektrowerkzeugs 10d ermittelt.

## Patentansprüche

1. Handwerkzeugmaschine mit einer Steuereinheit (12a, 12b, 12c, 12d) mit einer Steuersoftware mit Steuerparametern, die dazu vorgesehen ist, eine Antriebseinheit (14a, 14b, 14c, 14d) der Handwerkzeugmaschine zu steuern, und mit einer Schnittstelleneinheit (16a, 16b, 16c, 16d), die zu einer Aktualisierung oder Änderung der Steuersoftware und/oder der Steuerparameter derart vorgesehen ist, dass sich diese direkt auf einen Betrieb der Handwerkzeugmaschine auswirken, wobei die Schnittstelleneinheit (16a, 16b, 16c, 16d) dazu vorgesehen ist, die Steuereinheit (12a, 12b, 12c, 12d) mit einer externen Programmiereinheit (18a, 18b, 18c, 18d) zu verbinden, **dadurch gekennzeichnet, dass** die Steuereinheit (12a, 12b, 12c, 12d) dazu vorgesehen ist, empfangene benutzerspezifische und von der externen Programmiereinheit (18a, 18b, 18c, 18d) übertragene Daten über ein Werkzeugverhalten derart zu verarbeiten oder zu implementieren, dass die Handwerkzeugmaschine mit einem aggressiven Verhalten, einem Verhalten mit einer hohen Schlagenergie oder einem vibrationsarmen Verhalten betreibbar ist.

2. Elektrowerkzeug nach Anspruch 1, **dadurch gekennzeichnet, dass** die Schnittstelleneinheit (16a, 16b, 16c, 16d) dazu vorgesehen ist, eine drahtlose Verbindung zu der externen Programmiereinheit (18a, 18b, 18c, 18d) herzustellen.

3. Elektrowerkzeug nach einem der vorhergehenden Ansprüche, **gekennzeichnet durch** zumindest eine Sicherheitsvorrichtung (20a, 20b, 20c, 20d), die dazu vorgesehen ist, eine Benutzung der Schnittstelleneinheit (16a, 16b, 16c, 16d) zu autorisieren.

4. Elektrowerkzeug nach Anspruch 3, **dadurch gekennzeichnet, dass** eine Autorisierung durch die Sicherheitsvorrichtung (20c) abgestuft erfolgt.

5. Elektrowerkzeug nach einem der vorhergehenden Ansprüche, **dadurch gekennzeichnet, dass** die Steuereinheit (12a, 12b, 12c, 12d) dazu vorgesehen ist, empfangene benutzerdefinierte Stellgrößen zu verarbeiten und/oder zu implementieren.

6. Elektrowerkzeug nach einem der vorhergehenden Ansprüche, **dadurch gekennzeichnet, dass** die Steuereinheit (12a, 12b, 12c, 12d) dazu vorgesehen ist, empfangene benutzerdefinierte Daten über einen spezifischen Anwendungsfall zu verarbeiten oder zu implementierten.

7. Elektrowerkzeug nach einem der vorhergehenden Ansprüche, **dadurch gekennzeichnet, dass** die Steuereinheit (12a, 12b, 12c, 12d) dazu vorgesehen ist, empfangene benutzerdefinierte Daten über eine Umgebungsbedingung zu verarbeiten oder zu implementieren.

8. Elektrowerkzeug nach einem der vorhergehenden Ansprüche, **dadurch gekennzeichnet, dass** die Steuereinheit (12c, 12d) dazu vorgesehen ist, empfangene Daten zu einer speziellen Anwendung zu verarbeiten oder zu implementieren.

## Claims

1. Hand-held power tool having a control unit (12a, 12b, 12c, 12d) that has control software and said control software having control parameters and said control software being provided for the purpose of controlling a drive unit (14a, 14b, 14c, 14d) of the hand-held power tool, and having an interface unit (16a, 16b, 16c, 16d) that is provided for the purpose of updating or modifying the control software and/or the control parameters in such a way that these units act directly on the operation of the hand-held power tool, wherein the interface unit (16a, 16b, 16c, 16d) is provided for the purpose of connecting the control unit (12a, 12b, 12c, 12d) to an external programming unit (18a, 18b, 18c, 18d), **characterized in that** the control unit (12a, 12b, 12c, 12d) is provided for the purpose of processing or implementing received user-specific data transmitted by the external programming unit (18a, 18b, 18c, 18d) regarding a tool behavior in such a way that the hand-held power tool can be operated with an aggressive behavior, a behavior having high impact energy or a low vibration behaviour.

2. Electric tool according to Claim 1, **characterized in that** the interface unit (16a, 16b, 16c, 16d) is provided for the purpose of producing a wireless connection to the external programming unit (18a, 18b, 18c, 18d).

3. Electric tool according to any one of the preceding claims, **characterized by means of** at least one security device (20a, 20b, 20c, 20d) that is provided for the purpose of authorizing a use of the interface unit (16a, 16b, 16c, 16d).

4. Electric tool according to Claim 3, **characterized in that** an authorization is performed in a graded manner by means of the security device (20c).

5. Electric tool according to any one of the preceding claims, **characterized in that** the control unit (12a, 12b, 12c, 12d) is provided for the purpose of processing and/or implementing received, user-defined regulating variables.

6. Electric tool according to any one of the preceding claims, **characterized in that** the control unit (12a, 12b, 12c, 12d) is provided for the purpose of processing or implementing received, user-defined data regarding a specific application of the tool.

7. Electric tool according to any one of the preceding claims, **characterized in that** the control unit (12a, 12b, 12c, 12d) is provided for the purpose of processing or implementing received, user-defined data regarding an environmental condition.

8. Electric tool according to any one of the preceding claims, **characterized in that** the control unit (12c, 12d) is provided for the purpose of processing or implementing received data relating to a specific application.

## Revendications

1. Machine-outil électroportative comprenant une unité de commande (12a, 12b, 12c, 12d) munie d'un logiciel de commande avec des paramètres de commande, lequel est conçu pour commander une unité d'entraînement (14a, 14b, 14c, 14d) de la machine-outil électroportative, et munie d'une unité d'interface (16a, 16b, 16c, 16d) qui est conçue pour une actualisation ou pour une modification du logiciel de commande et/ou des paramètres de commande de telle sorte que ceux-ci agissent directement sur un fonctionnement de la machine-outil électroportative, l'unité d'interface (16a, 16b, 16c, 16d) étant conçue pour relier l'unité de commande (12a, 12b, 12c, 12d) à une unité de programmation externe (18a, 18b, 18c, 18d), **caractérisée en ce que** l'unité de commande (12a, 12b, 12c, 12d) est conçue pour traiter ou mettre en oeuvre les données relatives à un comportement d'outil, reçues spécifiquement à l'utilisateur et transmises par l'unité de programmation externe (18a, 18b, 18c, 18d), de telle sorte que la machine-outil électroportative peut fonctionner avec un comportement agressif, un comportant avec une énergie de frappe élevée ou un comportement à faibles vibrations.

2. Outillage électroportatif selon la revendication 1, **caractérisé en ce que** l'unité d'interface (16a, 16b, 16c, 16d) est conçue pour établir une liaison sans fil avec l'unité de programmation externe (18a, 18b, 18c, 18d).

3. Outillage électroportatif selon l'une des revendications précédentes, **caractérisé par** au moins un dispositif de sécurité (20a, 20b, 20c, 20d) qui est conçu pour autoriser une utilisation de l'unité d'interface (16a, 16b, 16c, 16d).

4. Outillage électroportatif selon la revendication 3, **caractérisé en ce qu'**une autorisation par le dispositif de sécurité (20c) a lieu de manière graduelle.

5. Outillage électroportatif selon l'une des revendications précédentes, **caractérisé en ce que** l'unité de commande (12a, 12b, 12c, 12d) est conçue pour traiter et/ou pour mettre en oeuvre des grandeurs de commande reçues définies par l'utilisateur.

6. Outillage électroportatif selon l'une des revendications précédentes, **caractérisé en ce que** l'unité de commande (12a, 12b, 12c, 12d) est conçue pour traiter ou pour mettre en oeuvre des données relatives à un cas d'application spécifique reçues définies par l'utilisateur.

7. Outillage électroportatif selon l'une des revendications précédentes, **caractérisé en ce que** l'unité de commande (12a, 12b, 12c, 12d) est conçue pour traiter ou pour mettre en oeuvre des données reçues relatives à une condition environnante définies par l'utilisateur.

8. Outillage électroportatif selon l'une des revendications précédentes, **caractérisé en ce que** l'unité de commande (12c, 12d) est conçue pour traiter ou pour mettre en oeuvre des données reçues relatives à une application spécialel.
